(19) Europäisches Patentamt
European Patent Office
Office européen des brevets

(11) EP 2 927 531 A1

(12) EUROPEAN PATENT APPLICATION
published in accordance with Art. 153(4) EPC

(43) Date of publication:
07.10.2015 Bulletin 2015/41

(51) Int Cl.:
F16D 65/18 (2006.01)     F16H 35/00 (2006.01)
G01B 7/00 (2006.01)      H01F 7/18 (2006.01)
F16D 121/24 (2012.01)    F16D 125/40 (2012.01)
F16D 125/48 (2012.01)    F16D 127/06 (2012.01)
F16D 129/08 (2012.01)

(21) Application number: 13861429.2

(22) Date of filing: 03.12.2013

(86) International application number:
PCT/JP2013/082478

(87) International publication number:
WO 2014/088001 (12.06.2014 Gazette 2014/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 03.12.2012  JP 2012264090
26.11.2013  JP 2013243900

(71) Applicant: NTN Corporation
Osaka-shi, Osaka 550-0003 (JP)

(72) Inventors:
• MASUDA, Yui
  Iwata-shi, Shizuoka 438-0037 (JP)
• NISHIKAWA, Akiyoshi
  Iwata-shi, Shizuoka 438-0037 (JP)

(74) Representative: Grünecker Patent- und
Rechtsanwälte
PartG mbB
Leopoldstraße 4
80802 München (DE)

(54) ELECTRIC PARKING BRAKE DEVICE

(57) According to an electric parking brake system, a power loss of when detecting a position or a displacement of a plunger is reduced without arranging a sensor, and a mounting space is also reduced. A resonance capacitor (54) is connected to a coil (37) of a solenoid (9) to form a resonance circuit, and a drive current superimposed with a resonance frequency is input to the solenoid (9) forming the resonance circuit. When the position of the plunger (10) in the coil (37) is changed, the inductance of the coil (37) changes and the resonance frequency moves. The position or the displacement of the plunger (10) is detected from such change without arranging the senor, and thus an installation space is not necessary. Therefore, the change in the detection value (change in resonance point) of both ends of the solenoid (9) is detected by superimposing the oscillation output in such manner, whereby a large power is not required and the loss is also small.

Fig.6

# Description

## TECHNICAL FIELD

The present invention relates to an electric parking brake system that uses an electric brake.

## BACKGROUND ART

An electric disc brake system of the below-identified patent document 1 is known for an electric parking system that uses an electric brake.

The brake system proposes a parking brake mechanism for an automobile that uses a solenoid.

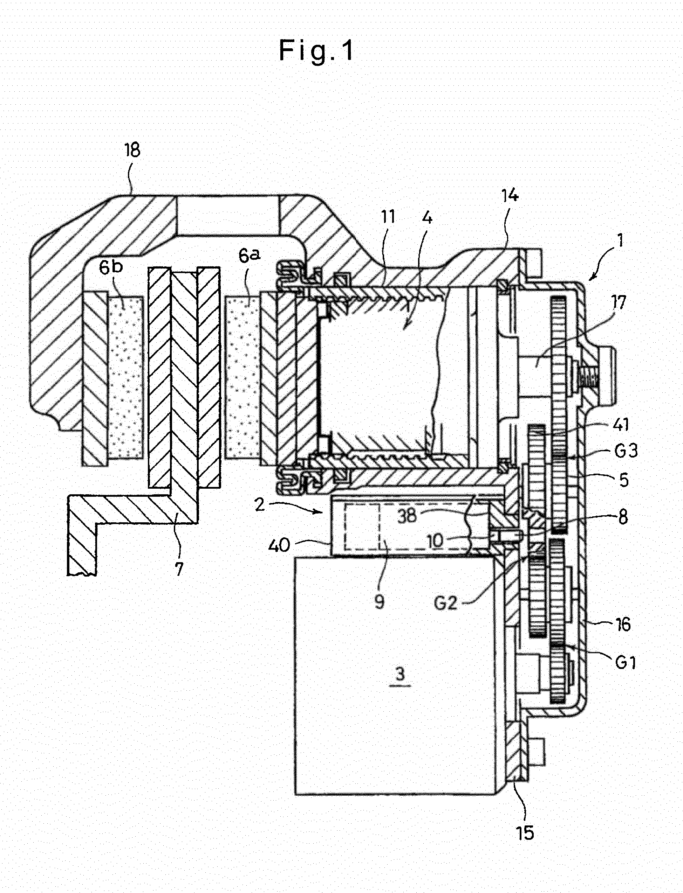

Next, a mechanism section of the brake system has substantially the same configuration as the electric parking brake system of the present application, and will be described using Fig. 1, which shows an embodiment of the present application.

As shown in Fig. 1, the brake system is configured by an electric brake 1 and a parking means 2.

The electric brake 1 has a configuration in which an electric motor 3 and a linear motion mechanism 4 are connected by way of a speed-reducing mechanism 5, and applies brake by pushing a brake pad 6a attached to the linear motion mechanism 4 against a brake rotor 7 according to the rotation of the motor 3.

The parking means 2 includes an engagement member 8 and a solenoid 9, and actuates a plunger 10 of the solenoid 9 to engage and lock the engagement member 8 arranged at a distal end of the plunger 10 to the speed-reducing mechanism 5.

If a service brake (foot brake) for the automobile and the parking brake are integrated, the following problems arise.

When the parking means 2 is released, for example, if the motor 3 is actuated before the engagement member 8 separates from the speed-reducing mechanism 5, the brake torque from the actuated motor 3 may break the solenoid 9 along with the engagement member 8 and the plunger 10, to which such engagement member 8 is attached. On the other hand, when the parking brake is actuated, the engagement force may lack if the plunger 10 has not reached a predetermined position, and hence the parking brake may not operate. Thus, the detection of the position or the displacement of the plunger 10 is essential.

One method of solving such problem includes a method of arranging a secondary coil coaxially with a coil 37 of the solenoid 9 and detecting the position of the plunger 10.

## PRIOR ART REFERENCE(S)

## PATENT DOCUMENT(S)

Patent document 1: Japanese Laid-Open Patent Publication No. 2012-087889

## DISCLOSURE OF THE INVENTION

## PROBLEMS TO BE SOLVED BY THE INVENTION

The method of separately arranging a sensor described above, however, has problems in that an installation space needs to be ensured and a drawing of wiring systems becomes complex as the secondary coil needs to be arranged in a limited place coaxial with the coil of the solenoid.

Furthermore, the number of components increases with addition of the sensor, which may thus increase the risk of malfunction.

As a method of solving such problem, consideration is made in applying an alternating current (AC) voltage to the solenoid and detecting a change in inductance generated by the displacement of the plunger.

In other words, when an AC power supply e is connected, the solenoid is

$$e = (r + j\omega L) \times 1$$

Assuming the AC power supply has an output resistance $r \ll |j\omega L|$,
$e =$. $\omega Li$ (i: constant current of AC power supply)

Therefore,

$$L = e/\omega i = e/2\pi fi$$

is obtained, and the inductance L can be detected.

In this case, the inductance L of the solenoid is proportional to number of magnetic fluxes that interlink. Thus, the inductance L changes according to the displacement of the plunger, which is a magnetic body that moves in the solenoid. The displacement of the plunger thus can be detected by detecting the inductance L. Therefore, the displacement of the plunger can be detected and the position can be calculated from the detected displacement without arranging the sensor.

In the method described above, the AC voltage is applied to the solenoid for detection. If the solenoid is a DC solenoid, however, the solenoid does not function even if the AC voltage is applied.

Thus, in the DC solenoid, for example, the displacement can be detected while functioning the solenoid by carrying out a control of switching the DC current and the AC voltage and detecting the displacement by time division.

In the method described, however, switching is difficult to carry out in a short period of time since the DC current and the AC voltage need to be switched and supplied to the solenoid by time division. Furthermore, noise may generate by such switching.

Moreover, a voltage source that supplies the AC voltage needs to output the AC voltage having an amplitude and a frequency suited for detection, and thus loss involved in the conversion may occur. In particular, such loss is desirably reduced in the vehicle since the vehicle is driven with a battery.

If such loss occurs, a heat sink for radiating such loss also needs to be provided, and a space for mounting a circuit of the AC voltage source is also necessary.

It is an object of the present invention to detect a position or a displacement of a plunger without arranging a sensor. The present invention also aims to reduce the loss and reduce the mounting space in such a case.

MEANS FOR SOLVING THE PROBLEMS

In order to solve the problem described above, the present invention provides an electric parking brake system comprising an electric brake wherein an electric motor and a linear motion mechanism are connected together by way of a speed-reducing mechanism, and an braking force is generated by pressing a friction member attached to the linear motion mechanism against a brake rotor by rotation of the motor, and a parking means configured to lock the speed-reducing mechanism bringing an engagement member into engagement with the speed-reducing mechanism by an actuation of a plunger of a solenoid; the electric parking brake system further comprising: an oscillating means that superimposes an oscillation output of a required frequency on an input of the solenoid of the parking means, and a processing means that estimates a position or a displacement of the plunger of the solenoid from change in a detection value of both ends of a solenoid coil.

With this configuration, if the position relationship of the coil and the plunger in the coil is changed, the impedance of the coil changes in the solenoid. In this case, the impedance of the coil is expressed as $X_L=r+j\omega L$ (L: inductance of coil). Thus, the position or the displacement of the plunger can be estimated without arranging the sensor by superimposing the oscillation output of the required frequency on the input of the solenoid, and detecting the change (e.g., change in self-resonance point) in the detection value of both ends of the solenoid coil.

The switching of the DC current and the AC voltage and the problem of noise caused by the switching do not occur since the oscillation output is superimposed. Furthermore, a large power is not required for the oscillation output, the loss is small, and the installation space is also not required since the oscillation output is superimposed on the DC and the change in the detection value (e.g., change in self-resonance point) of both ends of the solenoid coil is detected.

In this case, a configuration in which a capacitor for forming a resonance circuit is connected to the coil of the solenoid may be adopted.

According to this configuration, the capacitor is connected to the coil of the solenoid to form the resonance circuit, so that the inductance of the coil changes and the resonance frequency changes (moves) when the position of the plunger inside the coil changes. Thus, the detection value with respect to the oscillation output of the required frequency superimposed on the input of the solenoid changes with such change (movement). The position or the displacement of the plunger thus can be estimated from the change in the detection value without specifically arranging a sensor.

In this case, an oscillation frequency of the oscillating means may be set high with respect to a frequency for turning ON/OFF the solenoid.

With this configuration, the output of the oscillating means can be made not to be influenced by the operation of the solenoid, by setting the oscillation frequency higher than the frequency at which the solenoid can respond.

Furthermore, a projection amount of the engagement member may be estimated from a difference between a position of the plunger detected when the solenoid is turned ON and a position of the plunger detected when the solenoid is turned OFF.

By adopting such configuration, the engaging extent of the engagement member can be determined from the projection amount of the engagement member, so that the actuation state of the parking brake can be detected without arranging a sensor.

Moreover, before the actuation of the parking means, a measurement current at which the plunger does not displace may be input to the coil of the solenoid, a temperature of the coil of the solenoid may be calculated based on a measurement value at the time of the input, and an estimated position of the plunger may be calibrated based on the calculated temperature of the coil.

With such configuration, a very small measurement current of an extent the plunger does not displace is input to the coil of the solenoid, and the resistance value of the coil is calculated from the measurement voltage at the time, for example. The internal temperature of the coil after the current flow is estimated from the resistance value using a resistance method, which uses a temperature coefficient of copper, and the like, and the estimated position of the plunger is calibrated in view of the lowering of the suction force and the holding force of the coil due to such temperature rise.

Furthermore, while the motor is actuated and the linear motion mechanism is operated, the position of the plunger may be calculated for every constant time and whether a separated state of the engagement member from the speed-reducing mechanism is maintained may be checked from the calculated position.

By adopting such configuration, the position of the plunger is detected every constant time shorter than the actuation period of the solenoid, and the separated state of the engagement member from the speed-reducing mechanism is sequentially detected. The engaged state caused by the false operation of the parking means thus can be constantly checked from the separated state, thus ensuring safety.

While the solenoid is operated and the parking means is actuated, the position of the plunger may be calculated for every constant time and whether an engaged state of the engagement member with the speed-reducing mechanism is maintained may be checked from the calculated position.

By adopting such configuration, the position of the plunger is detected at a constant period shorter than the actuation period of the solenoid, and the engaged state of the engagement member and the speed-reducing mechanism is sequentially detected. The engaged state of the engagement member and the speed-reducing mechanism thus can be constantly checked, thus ensuring safety.

An automobile mounted with the electric parking brake system can be provided.

Furthermore, a lateral acceleration sensor for detecting the acceleration in the lateral direction may be arranged in the automobile, and the position of the plunger of the solenoid of the electric parking brake system may be estimated based on the detected value of the lateral acceleration sensor.

According to such configuration, when the lateral acceleration sensor detects that impact (e.g., collision, etc.) from the lateral direction is received, the error caused by the impact is corrected by estimating the position of the plunger of the solenoid in accordance with the detection output of the sensor.

EFFECT OF THE INVENTION

The present invention having the configuration described above can prevent accidents caused by the operation failure of the solenoid in advance. Furthermore, the displacement can be detected without separately arranging a sensor, so that the size and the cost can be reduced.

BRIEF DESCRIPTION OF THE DRAWINGS

Fig. 1 is a cross-sectional view of an embodiment;
Fig. 2 is a longitudinal cross-sectional view of a linear motion mechanism of Fig. 1;
Fig. 3 is a longitudinal cross-sectional view of Fig. 2;
Fig. 4 is a cross-sectional view of a solenoid of Fig. 1;
Fig. 5(a) is an operation explanatory view of Fig. 1, and Fig. 5(b) is an operation explanatory view of a main part of Fig. 5(a);
Fig. 6 is a circuit block diagram of the embodiment;
Fig. 7(a) is an operation explanatory view of the embodiment, and Fig. 7(b) is an operation explanatory view of the embodiment;
Fig. 8 is an operation explanatory view of the embodiment;
Fig. 9 is a circuit block diagram of example 4; and

Fig. 10 is a block diagram showing another mode of example 4.

BEST MODE FOR CARRYING OUT THE INVENTION

An embodiment of the present invention will be hereinafter described based on the drawings.

As shown in Fig. 1, an electric parking brake system of this embodiment includes an electric disc brake 1 for an automobile and a parking means 2 that uses a solenoid 9.

The electric disc brake has a structure in which a motor 3 and a linear motion mechanism 4 are connected by way of a speed reducing mechanism 5, and a brake pad 6a attached to the linear motion mechanism 4 is pressed against a brake rotor 7.

The motor 3 is a DC motor, and a reversible operation of the motor 3 can be easily carried out by simply inverting the polarity of the power supply.

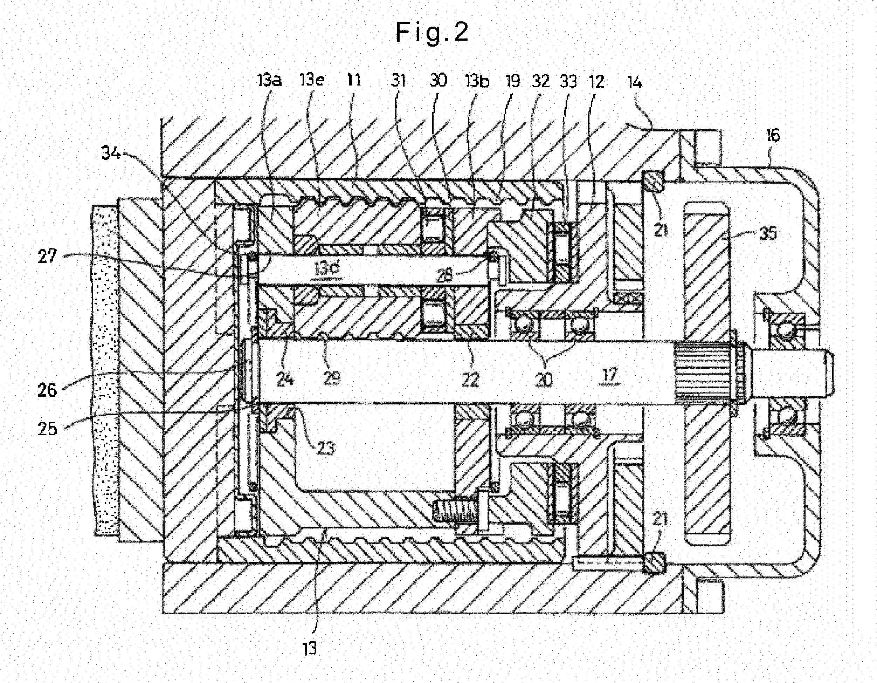

As shown in Fig. 2, the linear motion mechanism 4 includes an outer ring member 11, a bearing member 12, and a carrier 13, and is accommodated in a cylindrical housing 14. As shown in Fig. 1, a base plate 15 is provided at one end of the cylindrical housing 14 to extend radially outward side. An outer side surface of the base plate 15 and an opening of the housing 14 at the one end thereof are covered with a cover 16. The motor 3 is attached to the base plate 15 so that the rotation of the motor 3 is transmitted to a rotation shaft 17 by the speed-reducing mechanism 15 incorporated in the cover 16.

As shown in Fig. 1, a caliper body 18 is integrally attached to the other end of the housing 14. The caliper body 18 has a structure in which a fixed brake pad 6b and a movable brake pad 6a are arranged on both sides of the brake rotor 7 such that an outer peripheral portion of the brake rotor 7 passes therebetween. The movable brake pad 6a is fixedly coupled to the other end of the outer ring member 11.

The outer ring member 11 is incorporated as a slide member, and is prevented from rotating but is movable in the axial direction along the inside diameter surface of the housing 14. As shown in Fig. 2, the outer ring member 11 has, on the inside diameter surface thereof, a helical rib 19 having a V-shaped section.

The bearing member 12 is a disc-shaped member having a boss portion at the central part, and is incorporated at one axial end side of the outer ring member 11. A pair of rolling bearings 20 are incorporated in the boss portion of the bearing member 12 so as to be spaced apart from each other. The rolling bearings 20 rotatably support the rotation shaft 17, which extend along the center axis of the outer ring member 11. The bearing member 12 is prevented from moving toward the cover 16 covering the open end of the housing 14 by a stop ring 21 attached to the inner circumferential surface of the housing 14.

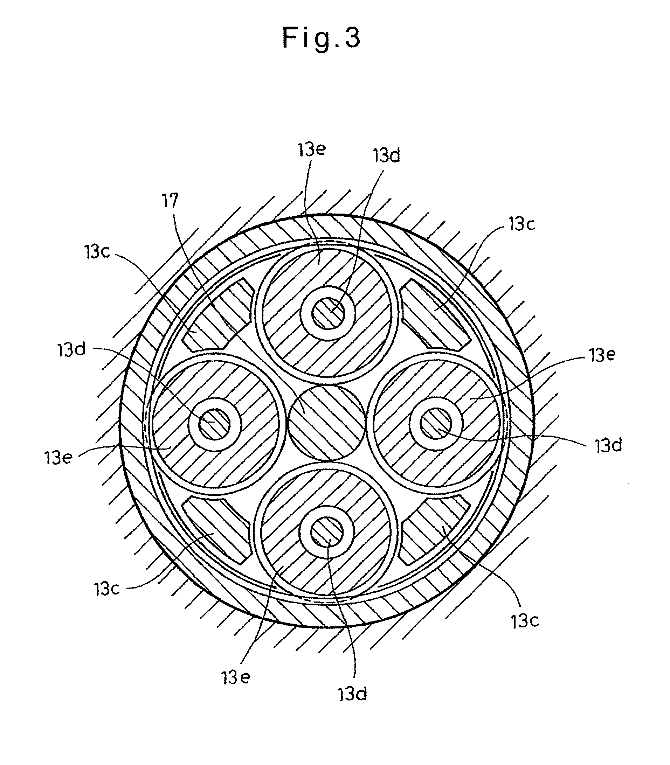

As shown in Figs. 2 and 3, the carrier 13 include a pair of discs 13a and 13b that axially face each other, a plurality of interval adjusting members 13, and a plurality of roller shafts 13d. A planetary roller 13e is rotatably supported by each of the roller shafts 13d, and is mounted in the outer ring member 11 so as to revolve around the rotation shaft 17.

The interval adjusting members 13c extend from an outer peripheral portion of one side of the disc 13a to the disc 13b and are circumferentially spaced apart from each other. The pair of discs 13a and 13b, which face each other, are coupled together by tightening screws screw-fitted to end faces of the interval adjusting members 13c.

Of the discs 13a and 13b, the inner disc 13b, which is positioned on the side of the bearing member 12, is rotatably and axially movably supported by a slide bearing 22 incorporated between the disc 13b and the rotation shaft 17.

A shaft insertion hole 23, which is a stepped hole, is formed at the central part of the outer disc 13a. A slide bearing 24 fitted in the shaft insertion hole 23 is rotatably supported by the rotation shaft 17. A metal washer 25 is fitted on the rotation shaft 17 adjacent to the outer end face of the slide bearing 24 to receive a thrust load. The metal washer 25 is prevented from separating from the rotation shaft 17 by a snap ring 26 attached to the shaft end of the rotation shaft 17.

The roller shafts 13d hav their respective opposed ends inserted in shaft insertion holes 27, in the form of elongated holes, formed in the discs so that the roller shafts 13d are radially movably supported. The roller shafts 13d are biased in the radial direction by elastic rings 28 wrapped around the roller shafts 13d. Each of the plurality of roller shafts 13d rotatably supports one of the planetary rollers 13e.

As shown in Fig. 3, the planetary rollers 13e are incorporated between the outside diameter surface of the rotation shaft 17 and the inside diameter surface of the outer ring member 11. Since the roller shafts 13d are pressed against and in elastic contact with the outside diameter surface of the rotation shaft 17 by the elastic ring 28 wrapped around the shaft ends of the roller shafts, , when the rotation shaft 17 rotates, the roller shafts 13d rotate by contacting friction with respect to the outside diameter surface of the rotation shaft 17. As shown in Fig. 2, a plurality of helical grooves 29 having a V-shaped section are formed at equal intervals in the axial direction on the outside diameter surface of each planetary roller 13e. The pitch of the helical grooves 29 is the same as the pitch of the helical rib 19 provided on the outer ring member 11. The helical rib 19 is engaged in the helical grooves 29 are screw-fitted to the spiral protrusions 19. Instead of the helical grooves 29, a plurality of circumferential grooves may be formed at equal intervals in the axial direction at the same pitch as the helical rib 19.

As shown in Fig. 2, a washer 30 and a thrust bearing 31 are incorporated axially between each planetary roller 13e and the inner disc 13b of the carrier 13, as shown in Fig. 2. An annular thrust plate 32 is incorporated axially between the carrier 13 and the bearing member 12, and a thrust bearing 33 is incorporated between the thrust plate 32 and the bearing member 12.

The opening of the outer ring member 11 at the other end thereof, which is positioned outwardly of the opening of the housing 14 at the other end thereof, is closed by attaching a seal cover 34 thus preventing foreign substances from entering inside.

As shown in Fig. 1, the speed-reducing mechanism 5 sequentially speed-reduces the rotation of an input gear attached to the rotor shaft of the motor 3 by a primary speed-reducing gear train G1, a secondary speed-reducing gear train G2, and a tertiary speed-reducing gear train G3, and transmits the rotation to an output gear 35 attached to the shaft end portion of the rotation shaft 17 to rotate the rotation shaft 17.

The speed-reducing mechanism 5 includes the parking means 2, which can lock and unlock the rotor shaft of the motor 3.

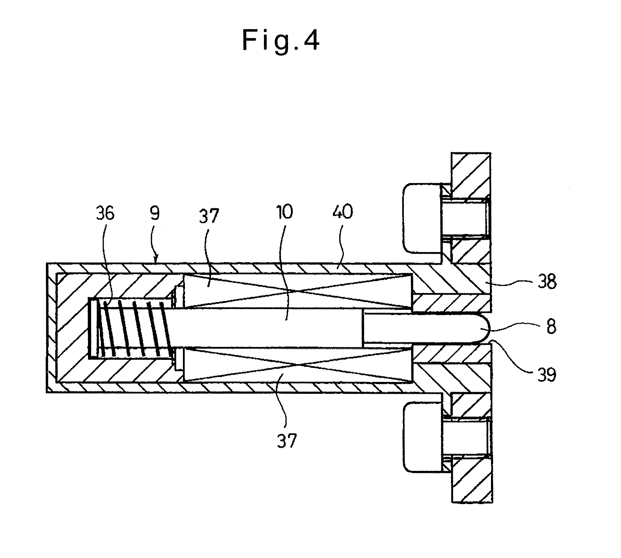

The parking means 2 includes a locking pin serving as an engagement member 8 and the solenoid 9 for driving the pin. As shown in Fig. 4, the pin driving solenoid 9 is a push-type actuator with a return spring 36 built in a linear solenoid (DC: Direct Current), and has a structure in which the locking pin is attached to the distal end of a plunger 10 as the engagement member 8.

Thus, when the solenoid 9 is energized, a turn ON current flows through the coil 37 thus pulling the plunger 10.

As a result, the locking pin 8 protrudes from the solenoid 9 (bobbin) against the return spring 36. When the flow of current is stopped, the plunger 10 is pulled by the spring 36, and the locking pin 8 is retracted into the solenoid 9 (bobbin).

The solenoid 9 is accommodated in a protective cover 40 having a front plate 38 formed with a pin hole 39 in which the locking pin 8 is slidably supported. As shown in Fig. 1, the solenoid 9 is arranged between the housing 14 and the motor 3 while being supported by the base plate 15.

By arranging the solenoid 9 between the housing 14 and the motor 3, the locking pin 8 at the distal end of the plunger 10 can move forward and backward with respect to an intermediate gear 41 on the output side of the secondary speed-reducing gear train G2.

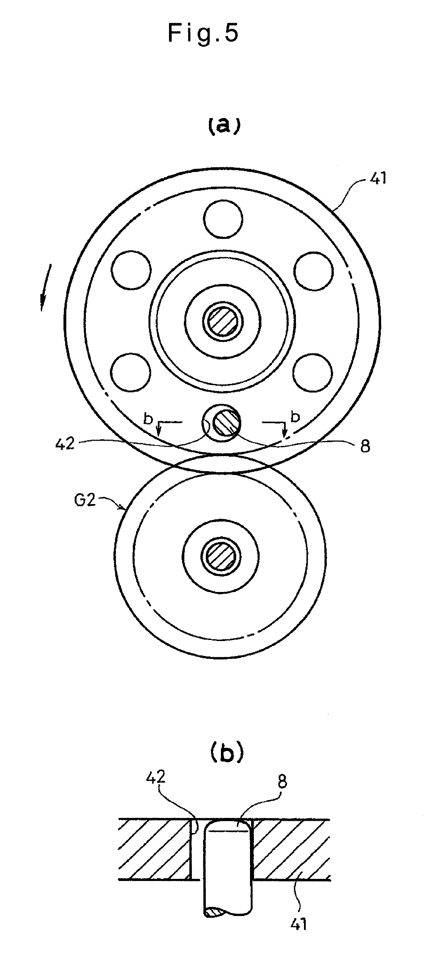

As shown in Fig. 5(a), the intermediate gear 41 includes a plurality of locking holes 42 arranged along a common circumference at equal intervals on a side surface thereof such that the locking pin 8 is moved toward and away from the locking holes 42 by the solenoid 9. As shown in Fig. 5(b), the intermediate gear 41 can be locked in position when the lock pin 8 is engaged in one of the locking holes 42.

In the present embodiment, the configuration in which the locking pin is arranged at the distal end of the plunger 10 as the engagement member 8 has been described, but the plunger 10 and the lock pin 8 may be integrated as the engagement member 8. Furthermore, it is apparent that the plunger 10 itself may be used as the engagement member 8.

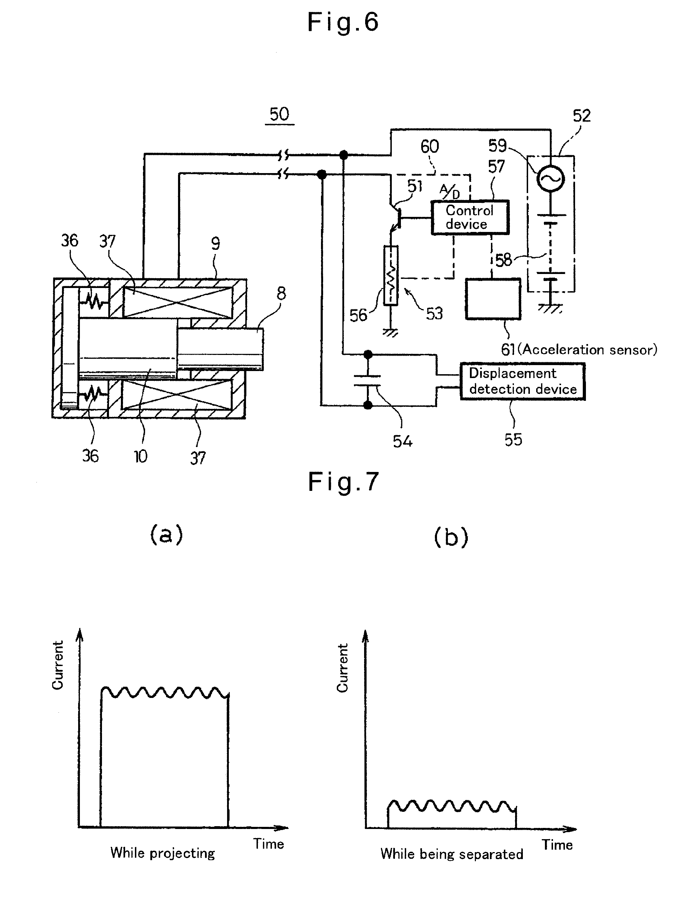

As shown in Fig. 6, the electric parking brake system includes a solenoid displacement detecting means 50.

As schematically shown in Fig. 6, the solenoid displacement detecting means 50 has a configuration in which a resonance circuit capacitor 54, a displacement detection device 55, a current detecting means 56, and a control device 57 are arranged in a drive circuit 53 of the solenoid 9 of the parking brake system in which the solenoid 9 and a switch means (NPN transistor herein) 51 are connected in series and connected to a power supply 52.

As previously described, the solenoid 9 includes the coil 37, and the plunger 10 inserted through the coil 37.

As shown in Fig. 6, the power supply 52 includes a DC power supply 58 and an oscillating means 59, and supplies an output in which a frequency component for position detection is superimposed on the direct current. In this case, the level of the frequency component is preferably sufficiently small compared to the DC component, and the frequency is preferably sufficiently high compared to the operation frequency of the solenoid. This prevents the position detection frequency component from influencing the operation of the solenoid 9.

The switch means 51 is a transistor switch circuit for driving the solenoid 9, and is an emitter grounded circuit in which the NPN transistor is arranged between the solenoid 9 and the ground. An example of using the NPN transistor has been described by way of example, but a PNP transistor may be used instead. In this case, the PNP transistor is arranged between the power supply 52 and the solenoid 9. Furthermore, an FET (include MOS type) may be used instead of the transistor.

The current detecting means 56 comprises, for example, a current detection resistor inserted between the emitter of the transistor of the switch means 51 and the ground, and detects the current flowing through the coil 37 of the solenoid 9 from the potential difference generated by the resistor. The current detection resistor is used for the current detecting means 56 herein, but a different current detecting means, such as a CT, may be used instead.

The control device 57 is a microcontroller such as an ECU (Engine Control Unit), and includes peripheral circuits such as an A/D converter, an input/output circuit, a timer circuit. The detection output of the current detecting means 56 is connected to the input of the control device 57. The output of the control device 57, in turn, is connected to the transistor of the switch means 51 thus forming a current control loop. Therefore, the opening/closing of the switch means 51 can be controlled based on the output of the current detecting means. Furthermore, the solenoid 9 may be directly driven even with a constant-voltage source such as the battery of the vehicle.

A parking switch (not shown) and an ECU (not shown; different from the ECU shown) are connected to the input of the control device 57, and the operation of the parking brake is controlled based on the inputs from the parking switch and the ECU.

Moreover, the displacement detection device 55 is connected to the input of the control device 57 to estimate the operation state of the plunger 10 of the solenoid 9, as will be described later.

As shown in Fig. 6, the resonance circuit capacitor 54 is connected in parallel with the coil 37 of the solenoid 9 to form a resonance circuit (parallel resonance circuit). The current is canceled out by the phase difference of the coil 37 and the resonance circuit capacitor 54 by adopting the parallel resonance circuit, and the resonance current is prevented from flowing to the outside of the resonance circuit.

The capacitor 54 may be omitted by designing such that a floating capacity of the coil 37 of the solenoid 9 functions as the resonance capacitor.

The displacement detection device 55 is configured by a filter circuit and a rectifying circuit (wave detection), and connected to both ends of the solenoid 9. The filter circuit is a band pass filter having the resonance frequency as the center frequency, and is provided for noise measures.

The rectifying circuit includes a smoothing circuit to rectify and smooth the filter output so that the resonance output is output as the level of the DC voltage. In this case, the displacement detection device may include an amplifying circuit to enhance the detection sensitivity.

Furthermore, a peak hold circuit may be arranged to carry out reset at a constant period so that the resonance output is output as the level of the DC voltage in place of the smoothing circuit.

The present embodiment is configured as above. In the parking brake system of the present application, a current superimposed with an AC signal, as shown in Figs. 7(a) and 7(b), is supplied from the power supply during the turning ON and OFF of the solenoid 9.

The AC component to be superimposed provides the resonance frequency generated by the solenoid 9 and the resonance circuit capacitor 54 as the position detection frequency component. Furthermore, as shown in Fig. 6, the AC signal is input to the displacement detection device 55 even when the switch means 51 is turned OFF since the displacement detection device 55 is connected in front of the switch means 51. Thus, a resonance frequency $\omega_o$ is set with the inductance of when the plunger 10 of the solenoid 9 is pulled by the return spring 36 and is at outside (outermost point) of the coil (bobbin) 37 as a reference, for example.

The supplying current superimposed with the resonance frequency $\omega_o$ is supplied by the control device 57 to the solenoid 9 through the switch means 51. The solenoid is thereby actuated by the DC component of the current, and suctions the plunger 10 into the coil 37 against the return spring 36.

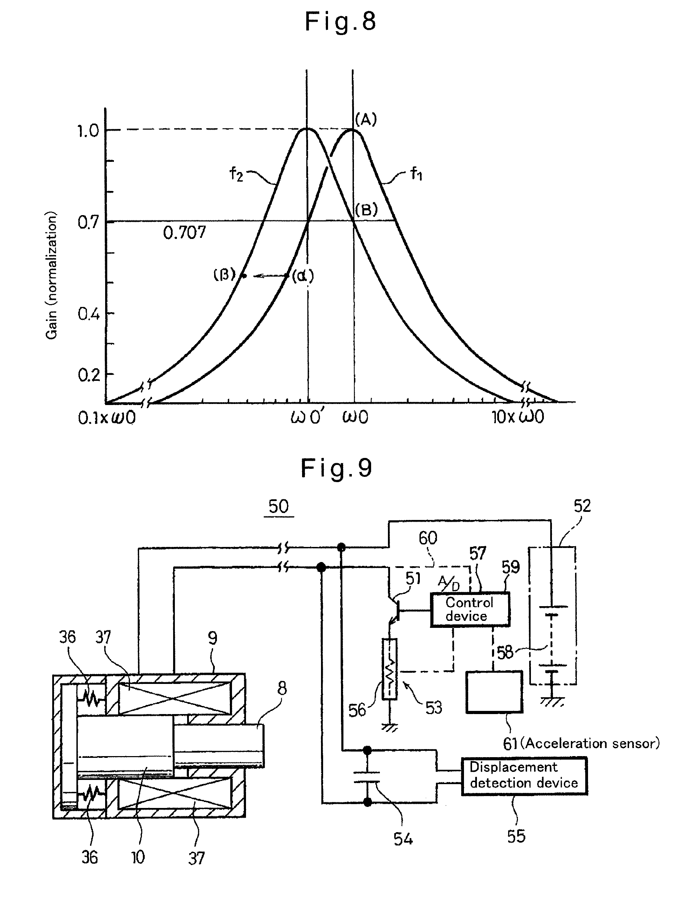

In this case, the resonance circuit formed by the solenoid 9 and the resonance circuit capacitor 54 has the resonance frequency characteristic of f1 in Fig. 8, for example.

Thus, when the plunger 10 is moved and the position relationship of the plunger 10 with respect to the coil 37 is changed, the inductance of the coil 37 changes. As a result, the inductance of the coil 37 changes and the resonance frequency $\omega_o$ of the resonance circuit changes. For example, since the inductance increases when the plunger 10 is accommodated in the coil 37 (bobbin), the resonance frequency lowers from $\omega_o \rightarrow \omega_o'$. The resonance frequency characteristics thus move from ($\alpha$) to ($\beta$), as shown in Fig. 8.

Therefore, the gain of the resonance point $\omega_o$ detected by the displacement detection device 55 lowers from A to B, for example.

Thus, the gain changes when the plunger 10 is moved, whereby the movement amount of the plunger 10 can be calculated from such change in gain.

In the present embodiment, the predetermined frequency to be superimposed is set to obtain a great changing amount of the gain using the resonance frequency $\omega_o$, but is not limited to such frequency. The predetermined frequency may be a frequency other than the resonance frequency $\omega_o$ since a difference in gain forms by the movement of the plunger 10, as apparent from Fig. 8, as long as the it is within the band showing resonance.

In this case, the frequency of the AC component to be superimposed is set to a sufficiently high frequency the operation of the solenoid 6 is not influenced with respect to the frequency at which the ON and OFF of the solenoid 9 are repeated.

The position of the plunger 10 thus can be estimated, and the movement amount of the plunger 10 (projection amount of the lock pin 8) can be estimated by storing the position of the plunger 10 estimated when the solenoid 9 is turned ON (switch means 51 is turned ON) and the position of the plunger 10 estimated when the solenoid 9 is turned OFF (switch means 51 is turned OFF) and calculating the difference thereof.

Therefore, if the movement amount of the plunger 10 can be estimated, the engaged state of the lock pin 8 at the distal end of the plunger 10 can be determined from the estimated value. Thus, the engaged state of the lock pin 8 can be estimated from the position or the displacement of the plunger 10 without arranging the sensor. The sensor installation space is thus not necessary.

If the engaged state is a fault, accidents that occur from the operation failure of the solenoid 9 can be prevented in advance by notifying the fault such as by setting off an alarm, for example.

Moreover, since the oscillation output is superimposed in the above manner, the problem of noise does not arise as in the case of switching the DC current and the AC voltage. Furthermore, since the oscillation output is superimposed on the DC current to detect the change in the detection value (change in resonance point) of both ends of the solenoid coil, a large power is not required for the oscillation output, and the loss is also small.

Example 1

Example 1 relates to a temperature rise of the solenoid 9, and describes enhancing the accuracy of when estimating the position and the displacement of the plunger 10 while compensating the reduction of the magnetic field caused by the temperature rise, in addition to the operation effects described above.

In other words, the solenoid 9 uses a copper wire for the coil 37. The copper wire has a DC resistance, and the DC resistance has a positive temperature coefficient. Therefore, when the DC resistance of the coil 37 increases with rise in temperature (include ambient temperature), the excitation current reduces and a magnetomotive force lowers.

The current control loop is used for the drive of the solenoid 9 in the illustration of Fig. 6, and thus a control is carried out to supply a constant current even if the temperature is changed.

Generally, however, the relationship between the DC resistance of the coil 37 and the temperature coefficient is such that if 20°C is normalized as one, the resistance ratio and the current ratio at each temperature of the copper wire are such that the suction force of the coil at 100°C greatly changes to about 56% of that of the coil at 20°C. Thus, error may occur in the control. Therefore, the estimation accuracy is enhanced by carrying out calibration based on the temperature of the coil 37 when calculating and estimating the position of the plunger 10.

In example 1, the control device 57 flows the measurement current to the solenoid 9 to measure the voltage, calculates the resistance value of the coil 37 from such current and the measurement result the voltage, and calculates the temperature from the resistance value before the parking brake operation. The position of the plunger 10 is estimated in view of the reduction in the magnetic field based on the temperature.

As a configuration therefor, for example, the A/D conversion input of the control device 57 is connected to the terminal of the solenoid 9 to measure the voltage, as shown with a broken line 60 in Fig. 6. Furthermore, the control device 57 drives the transistor of the switch means 51 in an unsaturated state, and inputs the measurement current (current value at which the plunger 10 of the solenoid 9 does not displace) to the coil 37.

In the parking brake system of example 1 configured as above, the temperature of the coil 37 is detected through a well-known resistance method that uses a resistance temperature coefficient of the copper, for example.

In other words, the resistance method calcula-

tion formula becomes,

$$R2/R1 = (234.5+t1)/(234.5+t2),$$

and the temperature t2 after current flow becomes, from the above equation,

$$t2 = R2/R1(234/5+t1)-234.5$$

Here,
T1: temperature before current flow (ambient temperature) (°C)
t2: temperature after current flow (°C)
R1: resistance before current flow (normal temperature value ($\Omega$)
R2: resistance after current flow ($\Omega$)

The temperature of the coil 37 can be estimated in the above manner, and the reduction amount of the current flowing to the coil 37 can be calculated based on the estimated temperature. Thus, the lowering of the magneto-motive force is predicted from the reduction amount of the current, and the estimated position of the plunger 10 during the parking brake operation is calibrated. The accuracy of when estimating the position of the plunger 10 thus can be enhanced.

Since the operation failure of the plunger 10 can be detected by enhancing the accuracy, accidents caused by the operation failure can prevented in advance.

Example 2

Example 2 describes periodically checking the state of the parking brake system and enhancing the stability, in addition to the above operation effects.

In other words, the position of the plunger 10 of the solenoid 9 is presumed and checked for when the parking brake system is turned OFF and for when the parking brake system is actuated.

A case in which the parking brake system is turned OFF includes a case in which the brake pedal is operated and the service brake (foot brake) is actuated, where whether or not the lock pin 8 is separated from the lock hole 42 of the intermediate gear 41 is checked so that the operation of the service brake does not have any trouble. This check is carried out on a steady basis by sequentially estimating the position of the plunger 10 of the solenoid 9 for every constant time shorter than the actuation period of the solenoid 9 using the method of the embodiment and example 1. The operation failure of the plunger 10 can be detected accordingly.

In this mode, the check is made by assuming the plunger 10 is at the position pulled out from the coil 37 (bobbin) by the return spring 36, as shown in Fig. 6. If the lock pin 8 is not separated, for example, the failure is notified by setting off an alarm, and the like to secure safety.

A case in which the parking brake system is actuated includes a case in which the vehicle is parked or stopped and the service brake is released, where whether or not the lock pin 8 is fitted into the lock hole 43 of the intermediate gear 41 is checked. This check is also made on a constant basis by sequentially estimating the position of the plunger 10 of the solenoid 9 every constant time shorter than the actuation period of the solenoid 9 using the method of the embodiment and example 1. The check is made by assuming the position of the plunger 10 of the solenoid 9. The operation failure of the plunger 10 can be checked accordingly.

In this mode, the check is made assuming the plunger 10 is at the position suctioned into the coil 37 (bobbin) against the return spring 36. If detected that the lock pin 8 is not fitted into the lock hole 43 of the intermediate gear 41, for example, an alarm is set off, for example to secure safety.

The vehicle is thus prevented from entering a non-break state by the operation failure by carrying out the check, as described above.

The check is intermittently carried out at a constant interval since the power consumption with respect to the estimating process can be reduced by intermittently carrying out the estimating process.

Example 3

Example 3 describes compensating the estimation of the position of the plunger 10 when a lateral force, that is, a force parallel to the axle connecting left and right wheels is applied with respect to the vehicle body, in addition to the operation effects described above.

In this case, as shown in Fig. 1, the plunger 10 of the solenoid 9 is arranged at a right angle to the brake rotor 7 attached to the axle and in parallel to the axle. Thus, when the lateral force is applied on the vehicle body, a force is applied on the plunger 10 in the forward/backward moving direction, which may cause an error in the estimated position.

To resolve such problem, an acceleration sensor 61 for detecting the acceleration in the lateral direction is arranged in the vehicle, as shown in Fig. 6. If the acceleration in the lateral direction detected by the sensor 61 is greater than or equal to a constant value, that is, if the acceleration reached a value the plunger 10 is influenced by the lateral force, the compensation corresponding to such value is carried out. In this case, a table, and the like in which a compensation value with respect to the acceleration in the lateral direction is set in advance is prepared for the calculation of the estimation, and the compensation with respect to the estimated position is carried out.

Example 4

Example 4 describes the oscillating means 59.

The oscillating means 59 is arranged in the power supply 52 in the embodiment and examples 1 to 3, but this is not the sole case. For example, as shown in Fig. 9, the control device 57, which is the microcontroller, may execute the function of the oscillating means 59. In this case, the control device 57 controls the opening degree of the switch means 51 to carry out switching (unsaturated state), so that the oscillation output of the required frequency, as shown in Figs. 7(a) and 7(b) is superimposed on the input of the solenoid of the parking means. The loss for separately driving the oscillating means 59 does not occur by causing the control device 57 to also function as the oscillating means 59. Furthermore, the installation space can be reduced and the cost can be reduced. Moreover, the frequency component can be applied so that the current feedback system includes the oscillating means 59, and thus for example, a stable operation can be expected even if directly driven with a voltage source such as the battery of the automobile.

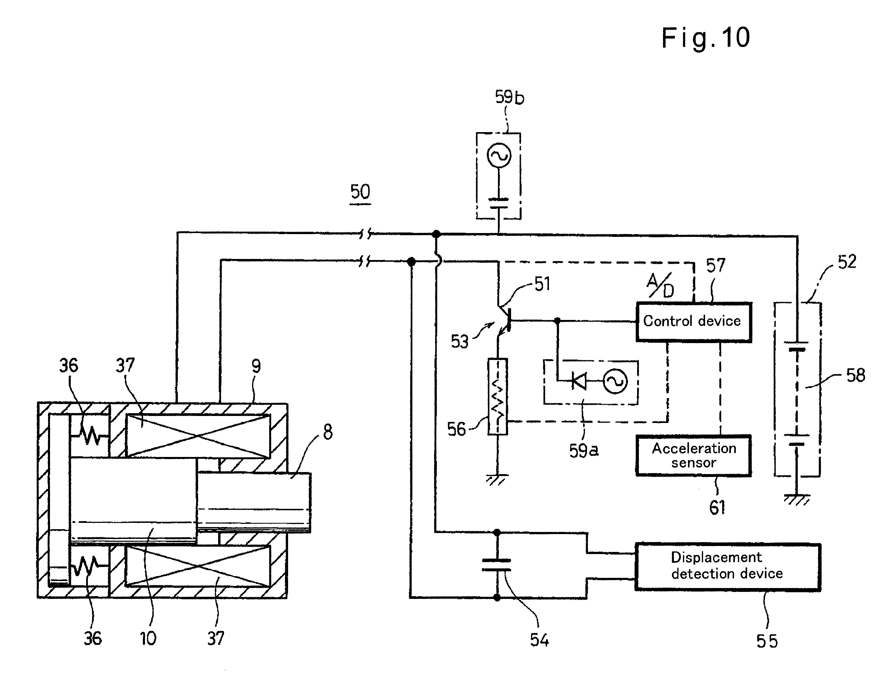

It is apparent that other than the above, the oscillating means 59 may, for example, be directly connected to the base circuit of the switch means 51 and controlled, as shown with a reference numeral 59a in Fig. 10, or be arranged on a circuit other than the power supply 52 or the control device 57, as shown with a reference numeral 59b in Fig .10.

In the embodiment and examples 1 to 3, the solenoid 9 for driving the pin is a push-type actuator, but is not limited thereto. The circuit may be devised so that the pull type actuator can be used.

Description of symbols

1    electric brake
2    parking means
3    motor
4    linear motion mechanism
5    speed-reducing mechanism
6    brake pad
7    rotor
8    lock pin
9    solenoid
10   plunger
37   coil
50   solenoid displacement detecting means
52   power supply
54   resonance circuit capacitor
55   displacement detection device
56   current detecting means
58   DC power supply
59   oscillating means
61   acceleration sensor

**Claims**

1. An electric parking brake system comprising an electric brake wherein an electric motor and a linear motion mechanism are connected together by way of a speed-reducing mechanism, and an braking force is generated by pressing a friction member attached to the linear motion mechanism against a brake rotor by rotation of the motor, and a parking means configured to lock the speed-reducing mechanism bringing an engagement member into engagement with the speed-reducing mechanism by an actuation of a plunger of a solenoid; the electric parking brake system further comprising:

   an oscillating means that superimposes an oscillation output of a required frequency on an input of the solenoid of the parking means, and a processing means that estimates a position or a displacement of the plunger of the solenoid from change in a detection value of both ends of a solenoid coil.

2. The electric parking brake system according to claim 1, wherein a capacitor for forming a resonance circuit is connected to the solenoid coil.

3. The electric parking brake system according to claim 1 or 2, wherein an oscillation frequency of the oscillating means is set high with respect to a frequency for turning ON/OFF the solenoid.

4. The electric parking brake system according to any one of claims 1 to 3, wherein a projection amount of the engagement member is estimated from a difference between a position of the plunger detected when the solenoid is turned ON and a position of the plunger detected when the solenoid is turned OFF.

5. The electric parking brake system according to any one of claims 1 to 4, wherein before the actuation of the parking means, a measurement current at which the plunger does not displace is input to the solenoid coil, a temperature of the coil is calculated based on a measurement value at the time of the input, and an estimated position of the engagement member is calibrated based on the calculated temperature of the coil.

6. The electric parking brake system according to any one of claims 1 to 5, wherein while the motor is actuated and the linear motion mechanism is operated, the position of the plunger is calculated for every constant time and whether a separated state of the engagement member from the speed-reducing mechanism is maintained is checked from the calculated position.

**7.** The electric parking brake system according to any one of claims 1 to 6, wherein while the solenoid is operated and the parking means is actuated, the position of the plunger is calculated for every constant time and whether an engaged state of the engagement member with the speed-reducing mechanism is maintained is checked from the calculated position.

# Fig.1

# Fig.2

EP 2 927 531 A1

# Fig.3

EP 2 927 531 A1

Fig.4

14

# Fig.5

## (a)

## (b)

# Fig.6

50

60
59
57
51 A/D
Control
device
36 37 9
8
58
56 53
36 10 37
61 (Acceleration sensor)
Displacement
detection device
54 55

# Fig.7

(a) (b)

Current

While projecting    Time

Current

While being separated    Time

# Fig.8

# Fig.9

Fig.10

## INTERNATIONAL SEARCH REPORT

| International application No. |
| --- |
| PCT/JP2013/082478 |

**A. CLASSIFICATION OF SUBJECT MATTER**

*F16D65/18*(2006.01)i, *F16H35/00*(2006.01)i, *G01B7/00*(2006.01)i, *H01F7/18* (2006.01)i, *F16D121/24*(2012.01)n, *F16D125/40*(2012.01)n, *F16D125/48* (2012.01)n, *F16D127/06*(2012.01)n, *F16D129/08*(2012.01)n

According to International Patent Classification (IPC) or to both national classification and IPC

**B. FIELDS SEARCHED**

Minimum documentation searched (classification system followed by classification symbols)

F16D65/18, F16H35/00, G01B7/00, H01F7/18, F16D121/24, F16D125/40, F16D125/48, F16D127/06, F16D129/08

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2010-54010 A (Hitachi Automotive Systems, Ltd.), 11 March 2010 (11.03.2010), claims 1, 6; paragraphs [0036] to [0041]; fig. 7 & US 2010/0051395 A1 & DE 102009039271 A & CN 101660580 A | 1-7 |
| Y | JP 2005-280536 A (Nissin Kogyo Co., Ltd.), 13 October 2005 (13.10.2005), paragraph [0094]; fig. 12 (Family: none) | 1-7 |

☒ Further documents are listed in the continuation of Box C. ☐ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 March, 2014 (03.03.14) | 11 March, 2014 (11.03.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/082478 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 1-202616 A  (Helion-Werke KG.), 15 August 1989 (15.08.1989), page 3, upper left column, line 15 to upper right column, line 13; upper right column, line 17 to lower left column, line 1; fig. 1 & US 4950985 A          & GB 2213594 A & GB 8828809 A0         & DE 3741734 A & FR 2624618 A | 2 |
| Y | JP 2004-190720 A  (NTN Corp.), 08 July 2004 (08.07.2004), paragraphs [0018] to [0019], [0026] to [0027], [0035] (Family: none) | 4,5 |

Form PCT/ISA/210 (continuation of second sheet) (July 2009)

**EP 2 927 531 A1**

**REFERENCES CITED IN THE DESCRIPTION**

**Patent documents cited in the description**

- JP 2012087889 A